# EUROPÄISCHE PATENTSCHRIFT

(11) **EP 3 527 469 B1**
(45) Veröffentlichungstag und Bekanntmachung des Hinweises auf die Patenterteilung: **06.10.2021**
(21) Anmeldenummer: 19155131.6
(22) Anmeldetag: 01.02.2019
(51) Int. Cl.: B62D 33/04, B60Q 3/54

(54) **KOFFERAUFBAU FÜR NUTZFAHRZEUGE**
BOX BODY FOR COMMERCIAL VEHICLES
CAISSE POUR VÉHICULES UTILITAIRES

(30) Priorität: 15.02.2018 DE 102018001177
(43) Veröffentlichungstag der Anmeldung: 21.08.2019
(73) Patentinhaber: Fahrzeugwerk Bernard Krone GmbH & Co. KG, 49757 Werlte (DE)
(72) Erfinder: Thiel, Mario, 19273 Teldau (DE)
(74) Vertreter: Pott, Ulrich

(56) Entgegenhaltungen:
- EP-A1- 2 524 855
- EP-A1- 2 594 464
- DE-A1- 4 410 172
- DE-A1- 10 161 643
- DE-A1-102010 015 956
- DE-U1-202004 014 468
- US-A1- 2008 190 066

## Beschreibung

Die Erfindung bezieht sich auf einen Kofferaufbau für Nutzfahrzeuge mit vorzugsweise aus Sandwichpaneelen gefertigten Dach-, Seitenwand- und/oder Bodenteilen, wobei zumindest ein Kabelkanal zur Anordnung von Leitungen und/oder Kabelstrecken in den Kofferaufbau integriert ist, wobei zwischen einer Seitenwandung und einem Bodenteil der Kabelkanal vorgesehen ist, der im Wesentlichen bündig mit einer Außenwand eines Seitenwandteiles und im Wesentlichen bündig mit einer Unterseite eines Bodenteils abschließt und durch eine demontierbare Abdeckung verschließbar ist.

Kofferaufbauten der vorgenannten Art mit temperaturgedämmten Seitenwandteilen, Dachteilen und Bodenteilen weisen herkömmlicherweise elektrische und pneumatische Leitungen zur Versorgung von Bauteilen wie z. B. Rückleuchten, der Bremsanlage u. dgl. auf, die in im Bodenbereich integrierten Kanälen, also im Bodenteil unterhalb eines Ladebodens, angebracht sind. Dadurch ist die Festigkeit des Bodens verringert, da die Bodenteile aufgrund der Kabelkanäle entsprechend geschwächt sind. Durch die integrierten Kanäle zur Anordnung von Versorgungsleitungen sind beispielsweise in Bodenteilen angeordnete Bodenquerträger durchbohrt und dadurch geschwächt, so dass aufgrund der Belastung durch das zu transportierende Ladegut die Querträger nicht dauerhaft einer derartigen Belastung standhalten können. Daher kommt es bei bekannten Kofferaufbauten immer wieder zu einer plastischen Verformung von Bodenteilen bis hin zu einem Bruch von Bodenteilen. Des Weiteren können Leitungen erst nach der Montage des gesamten Kofferaufbaus in Bodenteilen verlegt werden. Auf Funktionsfähigkeit geprüfte Leitungsverbindungen müssen dazu wieder getrennt werden. Größere Steckverbindungen sind vielfach in einem herkömmlichen Kabelkanal nicht anzuordnen, so dass die Kabeladern von z. B. elektrischen Leitungen einzeln verlegt werden müssen. Zudem verschlechtern die Kanäle die Temperaturisolation von Bodenteilen.

Aus der EP 2 594 464 A1 ist ein Kofferaufbau für Nutzfahrzeuge der eingangs genannten Art bekannt, bei dem ein Verbindungsprofil für einen Kofferbau eines Fahrzeuges vorgesehen ist, das als geschlossenes Hohlprofil ausgestaltet ist, das an einer ersten Längsseite ein erstes Steckverbindungsmittel und an einer dieser abgewandten zweiten Längsseite ein zweites Steckverbindungsmittel aufweist. Diese Steckverbindungsmittel sind zum Verbinden mit jeweils einer Seitenwand, einer Deckenplatte und/oder einer Bodenplatte des Kofferaufbaus ausgestaltet. Dieses Verbindungsprofil kann einen ersten Hohlraum und einen zweiten Hohlraum aufweisen, in denen ein Kabel hindurchgeführt ist, um ein Beleuchtungsmittel mit elektrischer Energie zu versorgen. Eine Außenwand des Verbindungsprofils weist einen lichtdurchlässigen Wandungsbereich auf, wobei in dem zweiten Hohlraum die Beleuchtungseinrichtung angeordnet ist. Damit muss das Kabel der Beleuchtungseinrichtung auch einzeln verlegt werden. Da das Verbindungsprofil an mehreren Stellen des Kofferaufbaus vorgesehen ist, beschränkt sich die Kabelanordnung jedoch nur auf die Bereiche des Verbindungsprofils, also auf die Eckbereiche des Kofferaufbaus. Der Kofferaufbau ist in den Stellen, an denen die Verbindungsprofile vorgesehen sind, schlecht isoliert und kann auch höheren Belastungen nicht standhalten.

Es ist Aufgabe der vorliegenden Erfindung, einen Kofferaufbau dahingehend zu verbessern, dass trotz integrierter Kabelkanäle Bodenteile weniger geschwächt sind und eine gute Isolation aufweisen.

Zur Lösung dieser Aufgabe zeichnet sich der Kofferaufbau für Nutzfahrzeuge der eingangs genannten Art dadurch aus, dass ein Seitenwandteil abgestuft ausgebildet ist und einen Freiraum zur Anordnung eines Bodenteils aufweist, wobei das Bodenteil bereichsweise in den Freiraum einsetzbar ist und sich die Seitenwand auf einer Oberseite des Bodenteils abstützt und sich unterhalb der Unterseite des Seitenwandteils der Kabelkanal bis in etwa hin zur Unterseite des Bodenteils anschließt.

Damit ist ein Kofferaufbau geschaffen, bei der der Ladeboden und damit die vorgesehenen Bodenteile nicht mehr mit einem Kabelkanal versehen sind, da der Kabelkanal in den Bereich außerhalb von Bodenteilen und unterhalb von Seitenwandteilen derart verlegt ist, dass dieser in die Seitenwand eines Kofferaufbaus und damit in die Seitenwandteile des Kofferaufbaus integriert ist. Dieser schließt sich unterhalb der entsprechenden Seitenteile an und ist auch optisch Bestandteil der einzelnen Seitenwandteile, wobei sich der Kabelkanal durchgängig von einer Vorderwandung des Kofferaufbaus bis hin zu der rückwärtigen Wandung, beispielsweise auch rückwärtigen Heckflügeltüren, erstrecken kann.

Die Seitenwandteile sind abgestuft ausgebildet und weisen einen Freiraum zur Anordnung eines Bodenteils aus. Das Bodenteil ist bereichsweise in den Freiraum eingesetzt, so dass sich die Seitenwand auf einer Oberseite des Bodenteils abstützt. Dadurch ist an der Unterseite des Seitenwandteils ein Raum zur Anordnung des Kabelkanals geschaffen, der sich bis hin zur Unterseite des Bodenteils erstreckt und sich an die Unterseite des Bodenteils anschließt. Damit können Boden- und Seitenwandteil sehr verbindungssteif miteinander verbunden werden, wobei ein hinreichender Raum verbleibt, um den Kabelkanal vorzusehen.

Der in die Seitenwandteile integrierte Kabelkanal ist mit einer demontierbaren Abdeckung versehen, wobei ein äußeres Seitenwandungsteil des Kabelkanals, der beispielsweise die Abdeckung bildet, auch noch mit Markierungsleuchten des Kofferaufbaus versehen werden kann. Diese sind integraler Bestandteil des Kofferaufbaus und stehen nicht über und ab von Aufbauteilen und sind somit geschützt angeordnet und sicher vor Anfahr- und Rangiergefahren.

Durch den vom Ladegutboden weg verlegten Kabelkanal ist die Biegefestigkeit der Bodenteile wesentlich erhöht. Des Weiteren kann eine optimierte Isolation der Bodenteile erzielt werden. Die Isolationseigenschaften der Seitenwandteile sind nicht durch den Kabelkanal beeinträchtigt, da im Eckbereich des Aufbaus genügend Isoliermaterial vorgesehen werden kann. Zudem ist der zumindest eine Kabelkanal, bevorzugt sind mehrere Kabelkanäle vorgesehen, von außen zugänglich. Dadurch können die während der Chassismontage des Kofferaufbaus auf Ablagen platzierten Leitungen nach der Montage des Kofferaufbaus von außen in die entsprechenden Kabelkanäle eingebracht werden. Danach können die Kanäle mit der Abdeckung verschlossen werden. Im Reparaturfall ist der Kabelkanal auf einfache Art und Weise von außen her zugänglich, so dass sich der Reparaturaufwand wesentlich beschleunigen und damit vereinfachen lässt.

Zur weiteren Erläuterung wird auf weitere Unteransprüche, die Zeichnung und die nachfolgende Beschreibung verwiesen. In der Zeichnung zeigen:
- Fig. 1:: In einer Seitenansicht einen auf Rädern abgestützten Sattelanhänger, mit einem Kofferaufbau,
- Fig. 2:: eine Vorderansicht des Kofferaufbaus nach Fig. 1 gemäß der Schnittlinie A-A in Fig. 1,
- Fig. 3:: vergrößert die Einzelheit B in Fig. 2, und
- Fig. 4:: im Querschnitt das abgewinkelte Metallteil als Gehäuse des Kabelkanals.

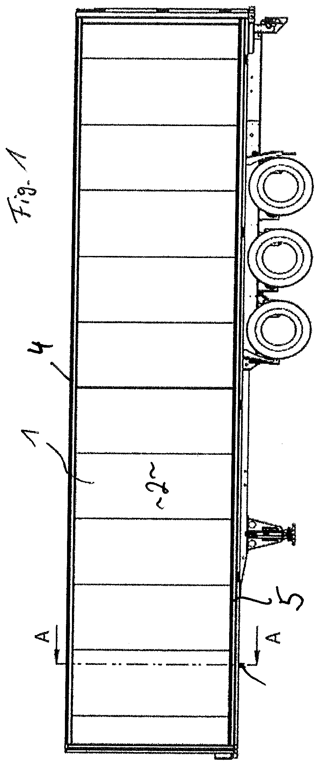

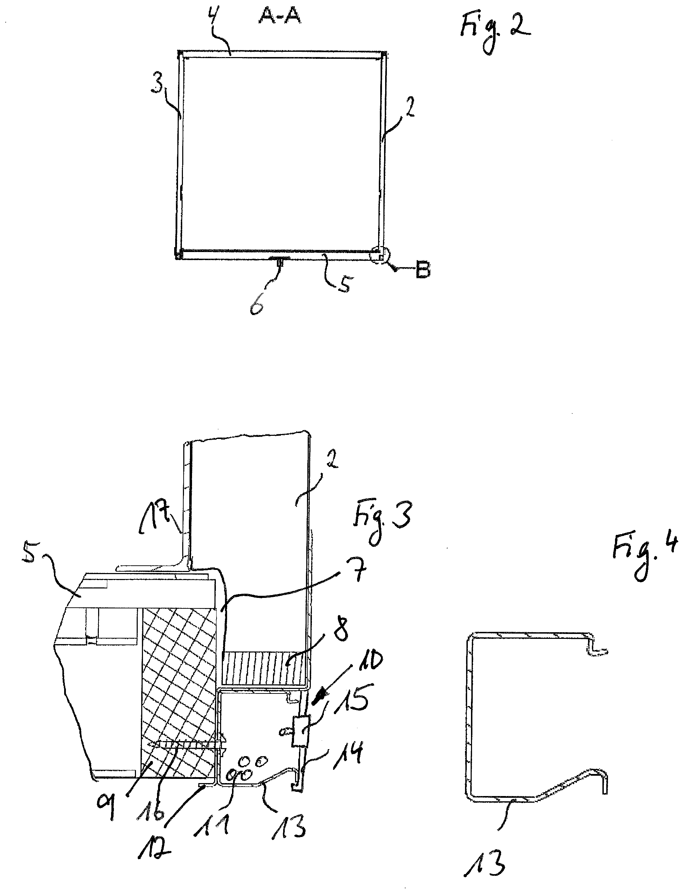

In der Zeichnung sind die übereinstimmenden Teile mit übereinstimmenden Bezugsziffern versehen. Allgemein mit 1 ist der Kofferaufbau eines Nutzfahrzeuges wie in Fig. 1 als Ausführungsbeispiel dargestellt beziffert. Die Seitenwandteile 2 und 3 erstrecken sich zwischen einem Boden 5 und Dachteilen 4. Wie Fig. 2 verdeutlicht, sind die in den Seitenwandteilen 2 gegenüberliegenden Seitenwandteile mit der Bezugsziffer 3 versehen. Mit 6 ist der Königszapfen des Nutzfahrzeuges beziffert.

Wie näher aus Fig. 3 hervorgeht, hat die Seitenwand 2 einen Freiraum 7, in den bereichsweise ein Bodenteil 5 eingesetzt ist. Somit ist das Seitenwandteil 2 ausgeklinkt und verkürzt ausgebildet, da es sich nicht bis zur Unterseite des Bodenteils 5 erstreckt. Unterseitig hat das Seitenteil 2 Dämmelemente 8. Das Bodenteil 5 ist mit Längsträgern 9 versehen.

Unterhalb des Seitenteils 2 ist der Kabelkanal 10 zur Anordnung von Leitungen 11 ausgebildet. Dieser wird durch ein mehrfach abgewinkeltes Metallteil 12 und das U-förmige Metallteil 13 gebildet, wie dies näher in Fig. 4 dargestellt ist. Das mehrfach abgewinkelte Metallteil 12 erstreckt sich bis an die Außenwandung des Seitenteils 2. Das U-förmige Metallteil 13 (Fig. 4) trägt die Abdeckung 14. In diese Abdeckung 14 ist auch noch eine Markierungsleuchte 15 integriert.

Der Kabelkanal 10 ist über Schrauben 16 an dem Bodenteil 5 bzw. dem Längsträger 9 angeschraubt. Die Festigkeit der Bodenteile 5 können gegenüber herkömmlichen Kofferaufbauten durch die Verlegung des Kabelkanals 10 in den Randbereich des Kofferaufbaus 1 um ca. 15 bis 20 % erhöht werden. Es liegt eine verbesserte Isolation des Kofferaufbaus vor, so dass bei Ausbildung des Kofferaufbaus als Kühlfahrzeug Energiekosten für eine Kühlanlage einzusparen sind. Zudem werden die Betriebszeiten der Kühlanlage reduziert.

## Patentansprüche

1. Kofferaufbau (1) für Nutzfahrzeuge mit vorzugsweise aus Sandwichpaneelen gefertigten Dach- (4), Seitenwand- (2, 3) und/oder Bodenteilen (5), wobei zumindest ein Kabelkanal (10) zur Anordnung von Leitungen (11) und/oder Kabelsträngen in den Kofferaufbau (1) integriert ist, wobei zwischen einer Seitenwandung (2, 3) und einem Bodenteil (5) der Kabelkanal (10) vorgesehen ist, der im Wesentlichen bündig mit einer Außenwand eines Seitenwandteiles (2, 3) und im Wesentlichen bündig mit einer Unterseite eines Bodenteils (5) abschließt und durch eine demontierbare Abdeckung (14) verschließbar ist, **dadurch gekennzeichnet, dass** ein Seitenwandteil (2, 3) abgestuft ausgebildet ist und einen Freiraum (7) zur Anordnung eines Bodenteils (5) aufweist, wobei das Bodenteil (5) bereichsweise in den Freiraum (7) einsetzbar ist und sich die Seitenwand (2, 3) auf einer Oberseite des Bodenteils (5) abstützt und sich unterhalb der Unterseite des Seitenwandteils (2, 3) der Kabelkanal (10) bis in etwa hin zur Unterseite des Bodenteils (5) anschließt.

2. Kofferaufbau (1) nach Anspruch 1, **dadurch gekennzeichnet, dass** in einer Seitenwandung des Kabelkanals (10) Markierungsträger (15) wie Markierungsleuchten des Kofferaufbaus (1) angeordnet sind.

3. Kofferaufbau (1) nach einem der Ansprüche 1 oder 2, **dadurch gekennzeichnet, dass** der Kabelkanal (10) ein Wandungsteil als Metallteil (12) aufweist, das sich doppelt oder mehrfach abgewinkelt einerseits an der Außenwandung eines Seitenteils (2, 3) und andererseits an einem Seitenbereich des Bodenteils (5) erstreckt.

4. Kofferaufbau (1) nach Anspruch 3, **dadurch gekennzeichnet, dass** sich die Abdeckung (14) des Kabelkanals (10) seitlich und von der Außenseite des Kofferaufbaus (1) zugänglich an die Außenwandung des Seitenteils (2, 3) anschließt.

5. Kofferaufbau (1) nach Anspruch 3 oder 4, **dadurch gekennzeichnet, dass** sich an das doppelt oder mehrfach abgewinkelte Metallteil (12) des Kabelkanals (10) ein Innenwandungsteil (13) anschließt, das den Kabelkanal (10) nach unten hin abschließt und gemeinsam mit dem doppelt oder mehrfach abgewinkelten Metallteil (12) an dem Bodenteil (5) befestigt ist.

6. Kofferaufbau (1) nach Anspruch 5, **dadurch gekennzeichnet, dass** das doppelt oder mehrfach abgewinkelte Metallteil (12) des Kabelkanals (10) und das an diesem anliegende Innenwandungsteil (13) des Kabelkanals (10) mit dem Bodenteil (5) verschraubt ist.

7. Kofferaufbau (1) nach einem der Ansprüche 1 bis 6, **dadurch gekennzeichnet, dass** das Bodenteil (5) und das Seitenwandungsteil (2, 3) an ihren dem Kabelkanal (10) zugewandten Bereichen ein Dämmelement (8) und/oder einen Längsträger (9) aufweisen.

8. Kofferaufbau (1) nach Anspruch 7, **dadurch gekennzeichnet, dass** das Dämmelement (8) und/oder der Längsträger (9) plattenförmig ausgebildet ist (sind).

9. Kofferaufbau (1) nach einem der Ansprüche 1 bis 8, **dadurch gekennzeichnet, dass** das Bodenteil (5) außerhalb des Kabelkanals (10) frei von inneren Kabelkanälen ausgebildet ist.

10. Kofferaufbau (1) nach einem der Ansprüche 1 bis 9, **dadurch gekennzeichnet, dass** der eine Kabelkanal (10) quer zur Längsmittelachse des Kraftfahrzeugaufbaus (1) zu den Seitenwänden (2, 3) verläuft.

11. Kofferaufbau (1) nach einem der Ansprüche 1 bis 10, **dadurch gekennzeichnet, dass** das Dach (4), Seitenwand (2, 3) und/oder Bodenteile (5) an einem metallischen Eckverbinder (17), einem Metallteil (12) und/oder einem Profil festlegbar sind und Kabel aus dem Kabelkanal (10) unterhalb des Kofferaufbaus (1) aus dem Kabelkanal (10) herausführbar sind.

## Claims

1. A box body (1) for commercial vehicles, having roof (4), side wall (2, 3), and/or base parts (5), preferably manufactured from sandwich panels, wherein at least one cable conduit (10) for arranging lines (11) and/or cable strands is integrated into the box body (1), wherein the cable conduit (10) is provided between a side wall (2, 3) and a base part (5), which conduit terminates essentially flush with an outer wall of a side wall part (2, 3) and is essentially flush with a lower side of a base part (5) and is closable by a removable cover (14), **characterized in that** a side wall part (2, 3) is formed stepped and has a free space (7) for arranging a base part (5), wherein the base part (5) is insertable in regions into the free space (7) and the side wall (2, 3) supports itself on an upper side of the base part (5) and adjoins the cable conduit (10) below the lower side of the side wall part (2, 3) approximately up to the lower side of the base part (5).

2. The box body (1) as claimed in claim 1, **characterized in that** marking supports (15) such as marking lights of the box body (1) are arranged in a side wall of the cable conduit (10).

3. The box body (1) as claimed in one of claims 1 or 2, **characterized in that** the cable conduit (10) has a wall part as a metal part (12), which extends, angled twice or multiple times, on one side on the outer wall of a side part (2, 3) and on the other side on a lateral region of the base part (5).

4. The box body (1) as claimed in claim 3, **characterized in that** the cover (14) of the cable conduit (10) adjoins the outer wall of the side part (2, 3) so it is accessible laterally and from the outside of the box body (1).

5. The box body (1) as claimed in claim 3 or 4, **characterized in that** an inner wall part (13), which terminates the conduit (10) on the bottom and is fastened to the base part (5) jointly with the metal part (12) angled twice or multiple times, adjoins the metal part (12) of the cable conduit (10) angled twice or multiple times.

6. The box body (1) as claimed in claim 5, **characterized in that** the metal part (12) of the cable conduit (10) angled twice or multiple times and the inner wall part (13) of the cable conduit (10) adjoining it is screwed together with the base part (5).

7. The box body (1) as claimed in any one of claims 1 to 6, **characterized in that** the base part (5) and the side wall part (2, 3) have an insulation element (8) and/or a longitudinal support (9) on their regions facing toward the cable conduit (10) .

8. The box body (1) as claimed in claim 7, **characterized in that** the insulation element (8) and/or the longitudinal support (9) is (are) formed plate-shaped.

9. The box body (1) as claimed in any one of claims 1 to 8, **characterized in that** the base part (5) is formed free of inner cable conduits outside the cable conduit (10).

10. The box body (1) as claimed in any one of claims 1 to 9, **characterized in that** the one cable conduit (10) extends transversely to the longitudinal center axis of the motor vehicle body (1) in relation to the side walls (2, 3).

11. The box body (1) as claimed in any one of claims 1 to 10, **characterized in that** the roof (4), side wall (2, 3), and/or base parts (5) are fixable on a metallic corner connector (17), a metal part (12), and/or profile and cables from the cable conduit (10) can be led out of the cable conduit (10) below the box body (1).

## Revendications

1. Structure de caisse (1) destinée à des véhicules utilitaires avec des parties formant toit (4), paroi latérale (2, 3) et/ou plancher (5) réalisées de manière préférée à partir de panneaux sandwich, dans laquelle au moins un chemin de câbles (10) permettant un agencement de lignes (11) et/ou de faisceaux de câbles est intégré dans la structure de caisse (1), dans laquelle le chemin de câbles (10), qui termine de manière essentiellement alignée une paroi extérieure d'une partie formant paroi latérale (2, 3) et termine de manière essentiellement alignée une face inférieure d'une partie formant plancher (5) et peut être fermé grâce à un couvercle (14) démontable, est fourni entre une paroi latérale (2, 3) et une partie formant plancher (5), **caractérisée en ce qu'**une partie formant paroi latérale (2, 3) est réalisée de manière étagée et présente un espace libre (7) permettant l'agencement d'une partie formant plancher (5), dans laquelle la partie formant plancher (5) peut être insérée par endroits dans l'espace libre (7) et la paroi latérale (2, 3) s'appuie sur une face supérieure de la partie formant plancher (5) et se raccorde sous la face inférieure de la partie formant paroi latérale (2, 3) du chemin de câbles (10) environ jusqu'à la face inférieure de la partie formant plancher (5).

2. Structure de caisse (1) selon la revendication 1, **caractérisée en ce que** des supports de signalisation (15), tels que des feux de signalisation de la structure de caisse (1), sont agencés dans une paroi latérale du chemin de câbles (10).

3. Structure de caisse (1) selon la revendication 1 ou 2, **caractérisée en ce que** le chemin de câbles (10) présente une partie formant paroi se présentant sous la forme d'une pièce de métal (12) qui s'étend en étant déviée deux fois ou plus de deux fois d'une part au niveau de la paroi extérieure d'une partie latérale (2, 3) et d'autre part au niveau d'une région latérale de la partie formant plancher (5).

4. Structure de caisse (1) selon la revendication 3, **caractérisée en ce que** le couvercle (14) du chemin de câbles (10) se raccorde à la paroi extérieure de la partie latérale (2, 3) latéralement et en étant accessible depuis le côté extérieur de la structure de caisse (1).

5. Structure de caisse (1) selon la revendication 3 ou 4, **caractérisée en ce qu'**une partie formant paroi intérieure (13), qui termine le chemin de câbles (10) vers le bas et est fixée à la partie formant plancher (5) en même temps que la pièce de métal (12), déviée deux fois ou plus de deux fois, du chemin de câbles (10), se raccorde à la pièce de métal (12) déviée deux fois ou plus de deux fois.

6. Structure de caisse (1) selon la revendication 5, **caractérisée en ce que** la pièce de métal (12), déviée deux fois ou plus de deux fois, du chemin de câbles (10) et de la partie formant paroi intérieure (13), reposant sur ladite pièce métallique, du chemin de câbles (10) est vissée à la partie formant plancher (5).

7. Structure de caisse (1) selon l'une quelconque des revendications 1 à 6, **caractérisée en ce que** la partie formant plancher (5) et la partie formant paroi latérale (2, 3) présentent un élément isolant (8) et/ou un support longitudinal (9) au niveau de leurs régions tournées vers le chemin de câbles (10).

8. Structure de caisse (1) selon la revendication 7, **caractérisée en ce que** l'élément isolant (8) et/ou le support longitudinal (9) sont réalisés en forme de plaque.

9. Structure de caisse (1) selon l'une quelconque des revendications 1 à 8, **caractérisée en ce que** la partie formant plancher (5) est réalisée de manière à être exempte de chemins de câbles intérieurs à l'extérieur du chemin de câbles (10).

10. Structure de caisse (1) selon l'une quelconque des revendications 1 à 9, **caractérisée en ce que** l'unique chemin de câbles (10) s'étend transversalement à l'axe médian longitudinal de la structure de véhicule automobile (1) jusqu'aux parois latérales (2, 3).

11. Structure de caisse (1) selon l'une quelconque des revendications 1 à 10, **caractérisée en ce que** les parties formant toit (4), paroi latérale (2, 3) et/ou plancher (5) peuvent être fixées au niveau d'un connecteur d'angle métallique (17), d'une pièce de métal (12) et/ou d'un profilé et des câbles issus du chemin de câbles (10) peuvent être guidés hors du chemin de câbles (10) sous la structure de caisse (1).
